# EUROPEAN PATENT APPLICATION

(11) **EP 1 887 389 A2**
(43) Date of publication of application: **13.02.2008**
(21) Application number: 06026783.8
(22) Date of filing: 22.12.2006
(51) Int. Cl.: G02B 5/04

(54) **Light pipe having a structure of enhancing an emission of a light**

(30) Priority: 11.08.2006 KR 20060076023; 25.08.2006 KR 20060081136; 01.12.2006 KR 20060120553
(71) Applicant: LG Electronics Inc., Yongdungpo-gu Seoul 150-010 (KR)
(72) Inventor: Lee, Sang Hoon LG Electronics Inc., Cheongju-si Chungcheongbuk-do 361-480 (KR); Cho, Han Kyu LG Electronics Inc., Cheongju-si Chungcheongbuk-do 361-480 (KR); Kim, Jong Jin Booyoung 5th Apt. no. 603-1202, Cheongju-shi, Chungcheongbuk-do 360-100 (KR)
(74) Representative: Katérle, Axel

(57) **Abstract**

The present invention is directed to a light pipe (200a,200b) having a structure of enhancing an emission of a light. According to one embodiment of the present invention, a hollow light pipe comprises a base pipe (220) comprising a structured inner surface (224) and a substantially smooth outer surface (222); and a plurality of diffusive particles (230a,230b) disposed on the outer surface.

According to another embodiment of the present invention, a hollow light pipe comprises a base pipe comprising a structured inner surface and a substantially smooth outer surface; and a film having a plurality of scattering patterns on at least one surface of the film, and being disposed at inside or outside the base pipe.

According to further another embodiment of the present invention, a hollow light pipe comprises a base pipe comprising a structured inner surface and a substantially smooth outer surface; and a cone-shaped extractor being disposed inside the base pipe.

## Description

### CROSS-REFERENCE TO A RELATED APPLICACTION

The present application claims the benefit of priority under 35 U.S.C. 119 based on the Korean Patent Application Nos. 10-2006-0076023 filed on August 11, 2006, 10-2006-0081136 filed on August 25, 2006 and 10-2006-0120553 filed on December 1, 2006. These applications are incorporated herein by references.

### BACKGROUND

### Field

The present invention is directed to a light pipe having a structure of enhancing an emission of a light.

### Background

An illuminating apparatus using a light pipe by which a light can be transmitted to far distance with relatively small transmission loss is known in the art. The light pipe is also called as a light conduit, an optical guide, or a light tube, and is used for effectively distributing a decorative or functional light over a relatively large area.

As well known in the art, the light pipe can get by roll-working an optical lighting film made of transparent polymer material in a tube form, and fixing it inside a transparent acryl pipe. The optical lighting film includes a smooth inner side not structured and an outer side structured with linear prism arrays forming a plurality of triangle grooves along with a certain direction. According to the above structural feature, the light pipe transmits a light in the longitudinal direction of the light pipe by which a light inputted into the light pipe within certain angle is restricted to inside the light pipe by inner total reflection. The typical light pipe like the above is disclosed in US Patent No. 4,805,984, which was cited in this application as reference.

However, the light pipe is used for illuminating a certain area as well as for illuminating a certain point (point illumination). In this case, a variety of technologies are used for distributing a light progressing inside the light pipe to outside. One of the technologies is the technology emitting a light through a changed area of the light pipe by changing formation of a prism disposed on a structured surface of the optical lighting film, that is, rounding off the edge of the prism, wearing down a part of the prism, or completely removing a prism from the chosen area.

Below, the principles of light transmission and reflection of the light pipe having the above construction will be explained in the scope necessary to understand the present invention with reference to the drawings.

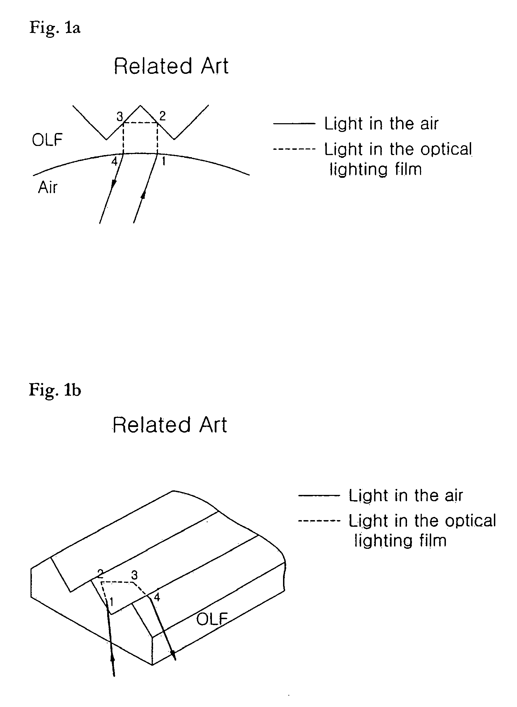

Fig. 1a is a cross-sectional view illustrating part of an optical lighting film for describing transmission and reflection in a light pipe used in illuminating system in the art. And, Fig. 1b is a perspective view illustrating part of an optical lighting film for describing transmission and reflection in a light pipe used in illuminating system in the art. But, for convenience's sake, in the figures, unstructured inner side is upper side, and structured outer side is lower side.

Referring to Fig. 1a and Fig. 1b, a light from a light source (not shown) is incident and refracted to an unstructured inner side of the optical lighting film (point 1), total-reflected on both sides of a prism of the structured outer side (point 2 and point 3), whereby the light proceeding to outside is refracted at the inner side (point 4), and is inputted again to inside, as shown by the arrow As this total- reflection process is repeated, the light is substantially proceeding along with the longitudinal direction of the light pipe. Thus, the transmission ability of a light generated from the light source can be enhanced by using the optical lighting film.

The illuminating system in the art like the above improves the transmission ability of a light generated from a light source by using the optical lighting film, but there was a wide difference in luminance between far distance and short distance from the light source. That is, it was difficult to properly control the light transmission inside the light pipe and the light emission to outside, and so difficult to obtain uniform brightness in the longitudinal direction of the light pipe in the illuminating system in the art.

The above references are incorporated by reference herein where appropriate for appropriate teachings of additional or alternative details, features and/or technical background.

### BRIEF DESCRIPTION OF THE DRAWINGS

The embodiments will be described in detail with reference to the following drawings in which like reference numerals refer to like elements wherein:

Fig. 1a is a cross-sectional view illustrating part of an optical lighting film for describing transmission and reflection in a light pipe used in illuminating system in the art;

Fig. 1b is a perspective view illustrating part of an optical lighting film for describing transmission and reflection in a light pipe used in illuminating system in the art;

Fig. 2a is a perspective view illustrating a light pipe according to one embodiment of the present invention;

Fig. 2b is a perspective view illustrating a light pipe according to another embodiment of the present invention;

Fig. 3a is a perspective view illustrating a light pipe according to further another embodiment of the present invention;

Fig. 3b is a cross-sectional view of the light pipe of Fig. 3a taken along the line A-A;

Fig. 3c is an enlarged partial cross-sectional view illustrating the area C of Fig. 3b;

Fig. 3d is a cross-sectional view of the light pipe of Fig. 3a taken along the line B-B;

Fig. 4 is a perspective view illustrating a light pipe according to further another embodiment of the present invention;

Fig. 5 is a partial transverse-sectional view illustrating the process of extracting the light outside the light pipe;

Figs. 6a to 6c are plane figures illustrating films having scattering patterns according to other embodiments of the present invention;

Figs. 7a to 7e are cross-sectional views illustrating light pipes according to other embodiments of the present invention;

Fig. 8 is an enlarged partial cross-sectional view illustrating the area D of Fig. 7a;

Figs. 9a to 9d are partial transverse-sectional views illustrating other embodiments of the present invention;

Fig. 10 is a graph comparing the brightness of the light pipe of the present invention with that of the conventional light pipe;

Fig. 11 is a perspective view illustrating the light pipe according to further another embodiment of the present invention;

Fig. 12 is a transverse-sectional view illustrating the process of extracting the light outside the light pipe;

Fig 13a is a front view illustrating the supporting body in Fig. 11;

Fig 13b is a front view illustrating the supporting body according to another embodiment of the present invention;

Fig. 14 is a perspective view illustrating the light pipe according to further another embodiment of the present invention;

Fig. 15 is a perspective view illustrating the light pipe according to further another embodiment of the present invention; and

Fig. 16a and 16b are perspective views illustrating the light pipes according to other embodiments of the present invention.

### DETAILED DESCRIPTON OF THE INVENTION

One object of the present invention is to provide a light pipe capable of emitting a light uniformly in the longitudinal direction of the light pipe.

Another object of the present invention is to provide a light pipe capable of enhancing brightness of a light transmitted from the light pipe.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

In the following drawings, same reference numbers will be used to refer to the same or similar parts through all embodiments. In addition, the detailed descriptions of the identical parts are not repeated.

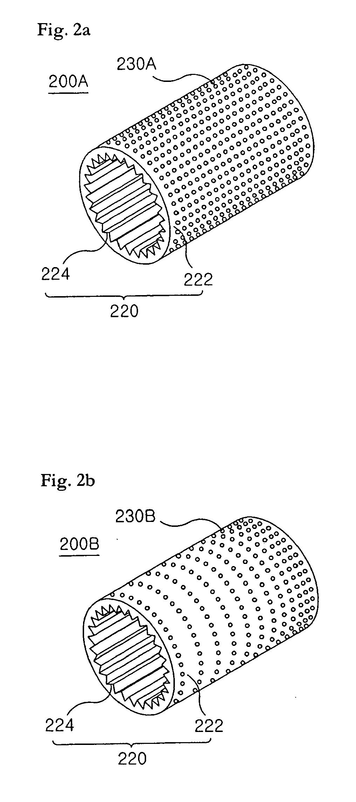

Fig. 2a is a perspective view illustrating the light pipe according to one embodiment of the present invention; and Fig. 2b is a perspective view illustrating the light pipe according to another embodiment of the present invention.

Referring to Figs. 2a and 2b, a light pipe 200A and 200B of the present invention comprises a base pipe 220 and a plurality of diffusive particles 230A and 230B. An inner surface 224 of the base pipe 220 is elongated substantially in the same direction as the longitudinal direction to the light pipe 200A and 200B, and is structured with a plurality of linear structures arranged side by side.

According to one embodiment, the linear structures may be a prism shape, namely, triangle, isosceles triangle, regular triangle and scalene triangle, and preferably, isosceles triangle.

According to another embodiment, the linear structures may be in the shape that a part of the prism wears down, namely, trapezoids.

An outer surface 222 of the base pipe 220 is an opposite surface to the inner surface 224, and is a substantially smooth plane.

Diffusive particles 230A and 230B are adhered to at least some part of the outer surface 220. In Fig. 2a, the diffusive particles 230A are adhered uniformly to the whole outer surface 222.

According to one embodiment, the diffusive particles 230A and 230B are made up of beads.

In Fig. 2b, the diffusive particles 230B are adhered more densely from one end toward the other end of the light pipe 200B. When a light is provided from a light source (not shown) disposed at the left side of the light pipe 200B, the light is transmitted from left to right in the light pipe 200B.

During the transmission, the light is inputted to the diffusive particle 230B adhered to the outer surface 222 of the light pipe 200B. Then, the light is scattered through the diffusive particle 230B, and is discharged to outside the light pipe 200B.

Here, when the diffusive particles 230B are scattered in the left end of the light pipe 200B to which the light is provided much, and when the density of the diffusive particles 230B is increased toward the right end of the light pipe 200B which the light is provided less, the light may be discharged uniformly through the whole surface of the light pipe 200B.

Also, if the diffusive particles are adhered intensively to a certain area of the light pipe, then amount of light exited from the certain area of the light pipe is increased. Therefore, the light pipe of the present invention may be used for special illumination.

Accordingly, the light pipe of the present invention has an advantage that the amount of light discharged from the light pipe can be controlled easily by controlling the density of the diffusive particles adhered to the outer surface of the light pipe.

According to one embodiment, the base pipe is made of a polymer which includes at least one of polycarbonate (PC), polymethyl methacrylate (PMMA), acryle, polypropylene, polystyrene, and polyvinyl chloride.

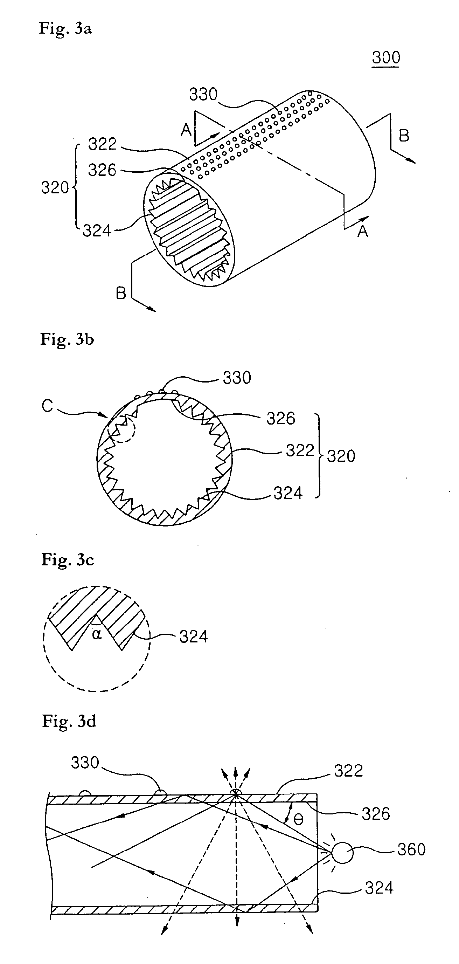

Fig. 3a is a perspective view illustrating a light pipe according to further another embodiment of the present invention; and Fig. 3b is a cross-sectional view of the light pipe of Fig. 3a taken along the line A-A.

Referring to Figs. 3a and 3b, the light pipe 300 comprises a base pipe 320 and diffusive particles 330.

An outer surface 322 of the base pipe 320 is a substantially smooth plane. An inner surface 324 of the base pipe 320 is elongated in substantially the same direction as the longitudinal direction to the light pipe 300, and is structured with a plurality of linear structures arranged side by side. The linear structures may be prisms. Here, at least one discharge part 326 to let out a light transmitted in the light pipe 300 is formed at the inner surface 324 of the light pipe 300.

The discharge part 326 is a smooth plane from which the linear structures are removed, differently from the structured area of the inner surface 324. Therefore, the light can be discharged more through the discharge part 326 than the structured area of the inner surface 324 which is structured for total reflection.

The diffusive particles 230A and 230B are adhered to some area of the outer surface 322 which is corresponding to the area on which the discharge part 326 is formed. And, the diffusive particles 230B may be adhered more densely from one end toward the other end of the light pipe 300 as shown in Fig. 2b.

One discharge part 326 is shown in Figs. 3a and 3b. However, it is not limited thereto, and, at least two discharge parts may be formed in the inner surface of the base pipe within the permissive angle and diameter range of the light pipe. And, the shape of cut surface of the base pipe may be circle, oval and polygon.

Fig. 3c is an enlarged partial cross-sectional view illustrating the area C of Fig. 3b.

Referring to Fig. 3c, an edge angle α of inner direction of prisms may be below 180°. In case the edge angle α of inner direction of prisms is an acute angle, the effect of total reflection of a light transmitted in the light pipe 300 can be enhanced.

Fig. 3d is a cross-sectional view of the light pipe of Fig. 3a taken along the line B-B.

Referring to Fig. 3d, the discharge part 326 is a substantially smooth plane, and is formed in substantially the same direction as the longitudinal direction to the light pipe 300.

A light source 360 provides a light inside a light pipe 300.

In case the light inputted to inside the light pipe 300 has an incident angle below a critical angle θ which is determined by the ratio of refractive index between the light pipe 300 and a medium around the light pipe 300, the light is reflected by total reflection condition of the Snell's law well known in the art, whereby the light progressing to outside the light pipe 300 is confined inside the light pipe 300 so that the light is transmitted substantially to the longitudinal direction of the light pipe 300.

Here, the medium filling inside of the light pipe 300 is air, and thus the light can be transmitted inside the light pipe 300 with less loss.

The light inputted to inside the light pipe 300 has an incident angle above a critical angle θ is discharged directly to the outer surface 322 of the light pipe 300. Here, if the light discharged from the outer surface 322 is transmitted to the diffusive particle 330, the light is scattered.

As shown above, the light inputted to inside the light pipe 300 is transmitted substantially to the longitudinal direction of the light pipe 300, and some of light is discharged to outside the light pipe 300.

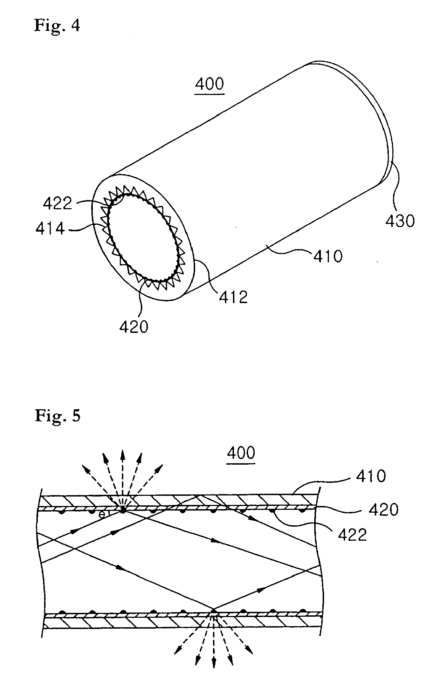

Fig. 4 is a perspective view illustrating the light pipe according to further another embodiment of the present invention.

Referring to Fig. 4, the light pipe 400 comprises a base pipe 410 and a film 420 having scattering patterns 422. An inner surface 414 of the base pipe 410 is elongated in substantially same direction as the longitudinal direction to the light pipe 400, and is structured with a plurality of linear structures arranged side by side. An outer surface 412 of the base pipe 410 is opposite to the inner surface 414, and, is a substantially smooth plane.

According to one embodiment, the base pipe 410 is made of a polymer which includes at least one of polycarbonate (PC), polymethyl methacrylate (PMMA), acryle, polypropylene, polystyrene, and polyvinyl chloride.

The film 420 is disposed at inside the base pipe 410, and has a plurality of scattering patterns 422 on at least one surface.

According to one embodiment, the film 420 is manufactured by printing white dots on one or both surfaces of a base film.

According to another embodiment, the film 420 is manufactured by printing colored dots or dyed colored dots except white dots on one surface or both surfaces of a base film.

And, the film 420 on which scattering patterns 422 are formed is disposed at inside the base pipe 410 in roll shape by bonding one edge and the other edge of the film 420. In order to bond one edge and the other edge of the film 420, a taping or sealing method well known in the art may be used.

In the bonding process, in case one edge plane and the other edge plane are overlapped, a light breaking phenomenon and a excess light emitting phenomenon through the overlapped planes may be occurred. Thus, an attention is required in the taping or sealing.

The film 420 is made up of transparent materials, preferably, homogeneous and isotropic materials, for example, acryl or polycarbonate.

Also, the film 420 should be flexible enough to be a roll shape. Here, the flexibility is relevant to the thickness of the film 420. Thus, considering the diameter of the light pipe 400, etc., a proper thickness should be selected.

The light pipe 400 of the present invention does not use an expensive optical lighting film which is used in the conventional light pipe. However, by using an extruding machine, the base pipe 410 can be produced successively in large quantity, and the film 420 having scattering patterns 422 is inserted into the base pipe 410. Thus, the cost for production of the light pipe 400 may be decreased.

The light pipe 400 of the present invention may further comprise a fixing plate 430 which fixes the film stably to the base pipe 410.

The film 420 is inserted into the base pipe 410 in roll shape, but is not adhered to the base pipe 410 by adhesive means. Therefore, it is possible that the film 420 may be separated from the base pipe 410.

The fixing plate 430 may be connected to one side or both side of the base pipe 410 so that the film 420 is fixed to the base pipe 410.

In Fig. 4, the fixing plate 430 is connected to one side of the base pipe 400, but the fixing plate 430 can be connected to both sides of the base pipe 400.

According to another embodiment, the fixing plate 430 can be structured to have an attach-separable structure to one side of the light pipe 400.

The fixing plate 430 may be made up of transparent materials which transmit the light well from a light source, for example, a polymer which includes at least one of polycarbonate (PC), polymethyl methacrylate (PMMA), acryle, polypropylene, polystyrene, and polyvinyl chloride.

According to another embodiment, the fixing plate 430 is made up of a reflective mirror which fixes the film 420 in the light pipe 400 and reflects the light reached an end of the light pipe 400. For this purpose, the surface of the reflective mirror is coated with materials having high reflectivity, for example, a metal such as aluminum, silver, and etc.

The reflective mirror may have flat surface or curved surface. If the reflective mirror has a curved surface, it may be a concave mirror having a curvature below 0.001.

Fig. 5 is a partial transverse-sectional view illustrating the process of discharging the light to outside the light pipe.

Referring to Fig. 5, a light source (not shown) provides a light to inside a light pipe 400.

If the light inputted to inside the light pipe 400 has an incident angle below a critical angle θ which is determined by the ratio of refractive index between the base pipe 410 (or the film 420) and a medium around the base pipe 410 (or the film 420), the light is reflected by total reflection condition of the Snell's law well known in the art, whereby the light transmitted to outside the light pipe 400 is confined inside the light pipe 400 so that the light is transmitted substantially to the longitudinal direction of the light pipe 400.

Here, a medium filling inside the light pipe 400 is air, and so the light can be transmitted to inside the light pipe 400 with less loss.

If the light is inputted to the scattering patterns 422 with an incident angle below a critical angle θ, the light is scattered by scattering patterns 422 and is discharged to outside the light pipe 400. Here, some of the light is reflected by scattering patterns 422, and is re-transmitted to inside the light pipe 400.

If the light is inputted to an area on which scattering patterns 422 of the film 420 are not formed with an incident angle above a critical angle θ, the light is discharged to the film 420 and the base pipe 410.

The light pipe 400 of the present invention comprises the film 420 having scattering patterns 422 inside, and scatters the light which is inputted to the scattering patterns 422. Thus, more light may be discharged from the light pipe 400, and the brightness of the light discharged from the light pipe 400 can be enhanced.

Also, the more the scattering patterns 422 are formed, the more the light is scattered through the scattering patterns 422. Thus, the brightness of the light emitted from the light pipe 400 can be controlled by controlling the amount of scattering patterns 422.

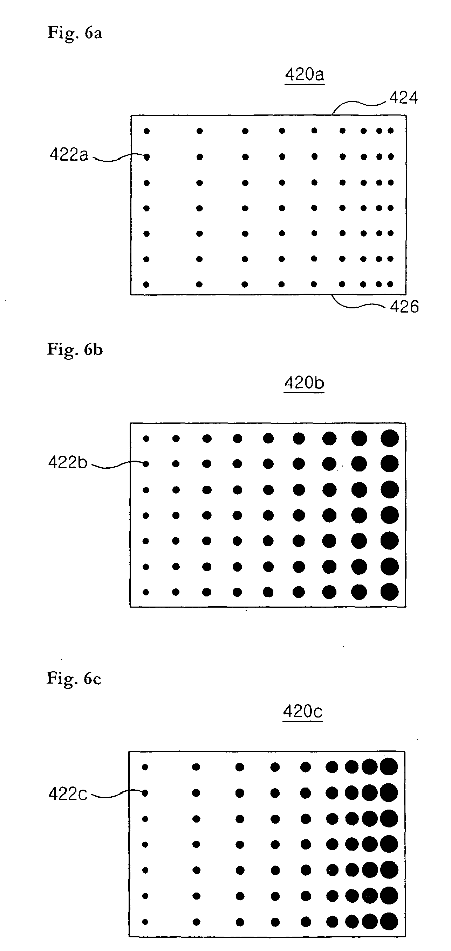

Figs. 6a to 6c are plane figures illustrating films having scattering patterns according to other embodiments of the present invention.

Referring to Fig. 6a, printed scattering patterns 422a in a film 420a have a regular diameter, and the distance between adjacent lines on which the scattering patterns 422a are formed becomes shorter from one end toward the other end of the film 420a. The scattering patterns 422a may be formed on one surface or both surfaces of the film 420a.

The film 420a having scattering patterns 422a is inserted to inside the base pipe 410 in roll shape by bonding a first edge 424 and a second edge 426. If the film 420a becomes the roll shape, the scattering patterns 422a in each line are disposed at a circular direction.

According to another embodiment, the film 420a having scattering patterns 422a is inserted to inside the base pipe 410 in roll shape in the state that the first edge 424 and the second edge 426 are not bonded.

For the purpose of discharging the light uniformly to the longitudinal direction of the light pipe 400, in the film 420a, the distance between adjacent scattering patterns 422a is large in a close area from the light source, and the distance between adjacent scattering patterns 422a is short in a distant area from the light source.

Referring to Fig. 6b, the distance between adjacent scattering patterns 422b is constant from one edge toward the other edge of the film 420b, but the diameter of the scattering patterns 422b is changed. If the scattering pattern 422b has a big diameter, the area that the incident light to the scattering pattern 422b can be scattered is wide, and so more amount of light may be discharged.

Referring to Fig. 6c, the distance between adjacent scattering patterns 422c and the diameter of the scattering patterns 422c are changed. If the diameters of the scattering patterns 422c are increased and are formed densely, the area which the incident light to the scattering pattern 422c are scattered becomes wide, and so more amount of light may be discharged.

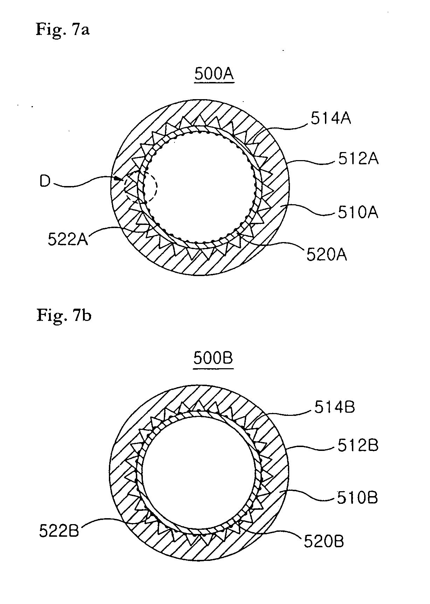

Figs. 7a to 7e are cross-sectional views illustrating the light pipes according to other embodiments of the present invention.

Referring to Fig. 7a, an inner surface 514A of the base pipe 510A is elongated in substantially same direction as the longitudinal direction to the light pipe 500A, and is structured with a plurality of prisms arranged side by side.

An outer surface 512A of the base pipe 510A is disposed substantially in parallel to the inner surface 514A, and, is a substantially smooth plane.

The prisms may be a shape of triangle, isosceles triangle, regular triangle or scalene triangle, preferably, isosceles triangle.

The film 520A having scattering patterns 522A is inserted to the base pipe 510A in roll shape, and the scattering patterns 522A are formed on one surface of the film 520A. Wherein the surface on which the scattering patterns 522A are formed is disposed toward the inside direction of the light pipe 500A.

Referring to Fig. 7b, the film 520B having scattering patterns 522B is inserted to the base pipe 510B in roll shape, and the scattering patterns 522B are formed on one surface of the film 520B. Here, the opposite surface to the surface on which the scattering patterns 522B are formed is disposed toward the inside direction of the light pipe 500B.

Comparing Fig. 7a with Fig. 7b, the film 520A as shown in Fig. 7a has scattering patterns 522A toward the inside direction of the light pipe 500A.

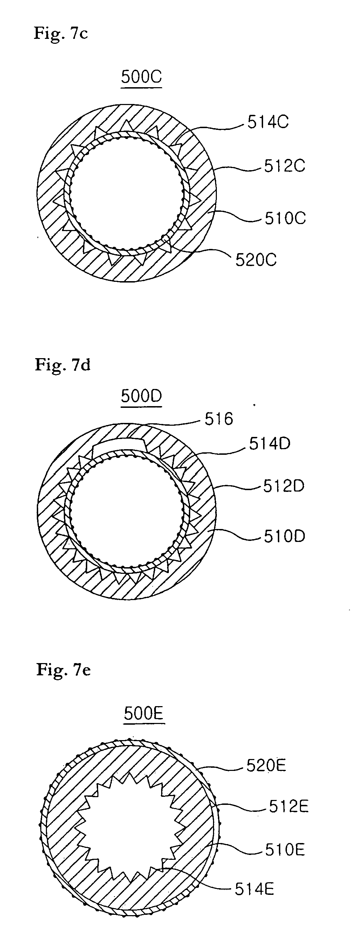

Referring to Fig. 7c, an inner surface 514C of the base pipe 510C is elongated in substantially same direction as the longitudinal direction to the light pipe 500C, and is structured with a plurality of linear structures arranged side by side.

An outer surface 512C of the base pipe 510C is disposed substantially in parallel to the inner surface 514C, and, is a substantially smooth plane.

The linear structures may be in a shape that an edge part of the prism shape is worn down, namely, trapezoids. The worn surface is corresponding to the curvature of the film 520C which is inserted to the base pipe 510C, and so the film 520C is inserted more stably into inside the base pipe 510C.

Referring to Fig. 7d, an outer surface 512D of the base pipe 510D is a substantially smooth plane. An inner surface 514D of the base pipe 510D is elongated in substantially same direction as the longitudinal direction to the light pipe 500D, and is structured with a plurality of linear structures arranged side by side. Here, at least one discharge part 516 which extracts a light transmitted in the light pipe 500D is formed at the inner surface 514D of the base pipe 510D.

The discharge part 516 is a smooth plane. Thus, compared with other areas structured with linear prisms in the inner surface 514D, more light can be discharged through the discharge part 516 to outside.

Thus, by forming the discharge part 516 in the inner surface 514D of the base pipe 510D, the amount of light discharged from a certain area of the light pipe 500D is increased. Therefore, the light pipe 500D of the present invention may be used for special illumination.

One discharge part 516 is shown in Fig. 7d, but the discharge part is not limited thereto, and at least two discharge parts may be formed in the inner surface of the base pipe according to the permissive angle and diameter range of the light pipe.

Referring to Fig. 7e, an inner surface 514E of the base pipe 510E is elongated in substantially same direction as the longitudinal direction to the light pipe 500E, and is structured with a plurality of linear structures arranged side by side.

An outer surface 512E of the base pipe 510E is an opposite surface to the inner surface 514E, and is a substantially smooth plane.

A film 520E having a plurality of scattering patterns is disposed at outside the base pipe 510E. The scattering patterns may be formed on one surface or both surfaces of the film 520E.

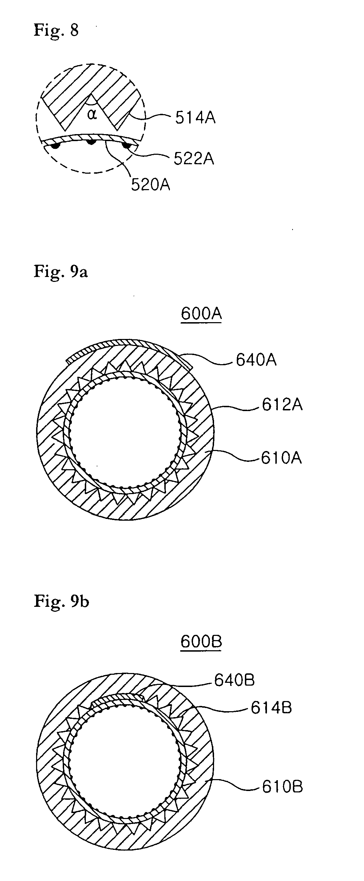

Fig. 8 is an enlarged partial cross-sectional view illustrating the area D of Fig. 7a.

Referring to Fig. 8, an edge angle α of inner direction of prisms may be below 180°. If the edge angle α of inner direction of prisms is an acute angle, the effect of total reflection of a light transmitted in the light pipe 500A can be enhanced.

Figs. 9a to 9d are partial transverse-sectional views illustrating other embodiments of the present invention.

Referring to Figs. 9a to 9d, the light pipe 600A, 600B, 600C and 600D further comprise a reflective body 640A, 640B, 640C and 640D.

The reflective body 640A, 640B, 640C and 640D is a means to reflect the light transmitted to inside the light pipe 600A, 600B, 600C and 600D. Therefore, if the reflective body 640A, 640B, 640C and 640D is disposed at a certain area of the light pipe 600A, 600B, 600C and 600D, it is prevented to discharge the light through the certain area, and the amount of light discharged through other areas is increased.

The reflective body 640A, 640B, 640C and 640D may be made up of materials having high reflectivity, for example, a metal as aluminum, silver, etc.

In Figs. 9a and 9b, the reflective body 640A and 640B is disposed on at least some areas of the outer surface 612A or the inner surface 614B of the base pipe 610A and 610B.

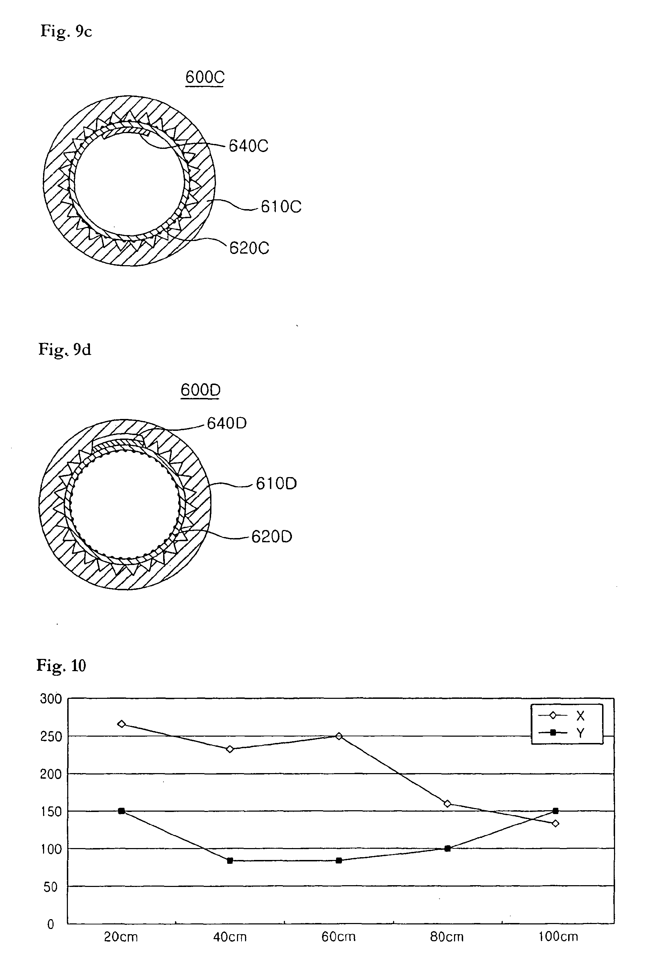

In Figs. 9c and 9d, the reflective body 640C and 640D is disposed on at least one surface of the film 620C and 620D which is inserted to inside the base pipe 610C and 610D. The reflective body 640C and 640D may be disposed on one surface or both surfaces of the film 620C and 620D.

The size and number of an area on which the reflective body is discharged may be properly selected depending on the purpose of preventing discharge of light and increasing the amount of light discharged to a certain area.

Fig. 10 is a graph comparing the brightness of the light pipe of the present invention with that of the conventional light pipe.

Referring to Fig. 10, X is an examination result of a light pipe 500A having a film 520A of the present invention, and Y is an examination result of the conventional light pipe having a plurality of prisms in the inner surface.

The light pipe 500A of the present invention comprises a base pipe 510A, a film 520A having scattering patterns 522A, and a reflective mirror. And, the base pipe 510A has an external diameter of 10cm, is structured with a plurality of prisms in the inner surface 514A, has the length of 100cm, and is made up of acryl. Also, the film 520A has the width of 100cm and the length of 29cm, is made up of polycarbonate, and is inserted to the light pipe 500A in roll shape.

One surface of the film 520A is printed with white ink to form scattering patterns 522A having the diameters of 0.5mm and 2mm, and, each scattering pattern 522A having different diameter is formed on the film by about 107.

Here, as the distance from the light source is farther, a bigger diameter of scattering pattern 522A is selected, and the film is formed so that the distance between adjacent scattering patterns 522A is narrower.

As a conventional light pipe, the light pipe has an external diameter of 10cm, is structured with a plurality of prisms in the inner surface, has a length of 100cm, and is made up of acryl. Also, a reflective mirror is connected to the end of the light pipe.

Metal halide lamp is used as light source, and the light provided from the light source is inputted to one end of the light pipes each.

A cross axis means the distance from one end of the light pipe, and the unit is cm. The one end close to the light source is a datum point.

A vertical axis means the brightness of the light emitted from the light pipe, and the unit is lux.

As shown in Fig. 10, the brightness of the present invention is enhanced remarkably than that of the conventional light pipe. Due to the reflective mirror and film 520A having scattering patterns 522A, the brightness of the light pipe 500A of the present invention is higher than that of light discharged from the conventional light pipe.

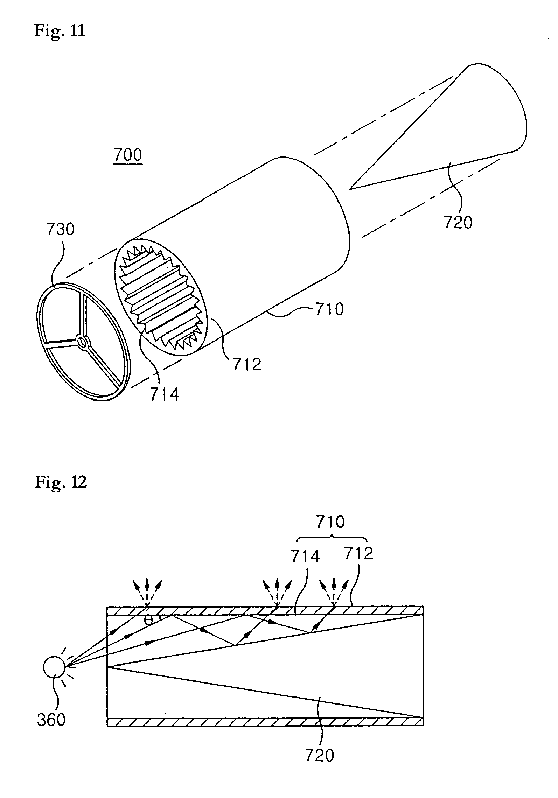

Fig. 11 is a perspective view illustrating the light pipe according to further another embodiment of the present invention.

Referring to Fig. 11, a light pipe 700 comprises a base pipe 710 and a cone-shaped extractor 720. The light pipe 700 may further comprise a supporting body 730 which is connected to an edge part of the extractor 720.

An inner surface 714 of the base pipe 710 is elongated in substantially same direction as the longitudinal direction to the light pipe 700, and is structured with a plurality of linear structures arranged side by side.

According to one embodiment, the linear structures may be a prism shape, namely, triangle, isosceles triangle, regular triangle, or scalene triangle.

According to another embodiment, the linear structures may be in a shape that an edge part of the prism shape is worn down, namely, trapezoids.

An outer surface 712 of the base pipe 710 is an opposite surface to the inner surface 714, and is a substantially smooth plane.

According to one embodiment, the base pipe 710 is made of polymer which includes at least one of polycarbonate (PC), polymethyl methacrylate (PMMA), acryle, polypropylene, polystyrene and polyvinyl chloride.

The cone-shaped extractor 720 is inserted to inside the base pipe 710, and reflects the light. The length of the extractor 720 may be same as or shorter than that of the base pipe 710.

The extractor 720 may be manufactured by applying Ag on a sheet made of SUS, Brass, Al, PET, etc., and coating it with Ti to prevent the thermal deterioration caused by heat absorption.

Alternatively, the extractor 720 may be obtained by dispersing micro-pores capable of scattering light in a resin sheet such as PET. Thus prepared sheet may be used as the extractor by inserting the sheet rolled as cone shape to inside the base pipe 710.

Fig. 12 is a transverse-sectional view illustrating the process of discharging the light to outside the light pipe.

Referring to Fig. 12, a light discharged from a light source 360 is inputted to inside the base pipe 710.

If the light inputted to inside the base pipe 710 has an incident angle below a critical angle θ which is determined by the ratio of refractive index between the base pipe 710 and a medium around the base pipe 710, the light is reflected by total reflection condition of the Snell's law well known in the art, whereby the light transmitted to the outside direction of the light pipe 700 is confined inside the light pipe 700 so that the light is transmitted substantially to the longitudinal direction of the light pipe 700.

Here, a medium filling inside the light pipe 700 is air, and so the light can be transmitted inside the light pipe 700 with less loss.

If the light transmitted to inside the light pipe 700 is inputted to the extractor 720, the course of transmission is altered. Then, the light may be inputted to the base pipe 710 with an incident angle of above the critical angle θ, and discharged to outside the base pipe 710.

The area of the extractor 720 becomes wider from one end close to the light source 360 toward the other end of the light pipe 700. Accordingly, though distant from the light source 360, the amount of light to be reflected can be increased. Thus, the amount of light discharged from the light pipe 700 can be increased in the distant area from the light source 360.

And, the light inputted to inside the light pipe 700 has an incident angle above a critical angle θ is discharged directly to the outer surface 712 of the base pipe 710. As shown above, the light inputted to inside the light pipe 700 is transmitted substantially to the longitudinal direction of the light pipe 700, and some of the light is discharged to outside the light pipe 700.

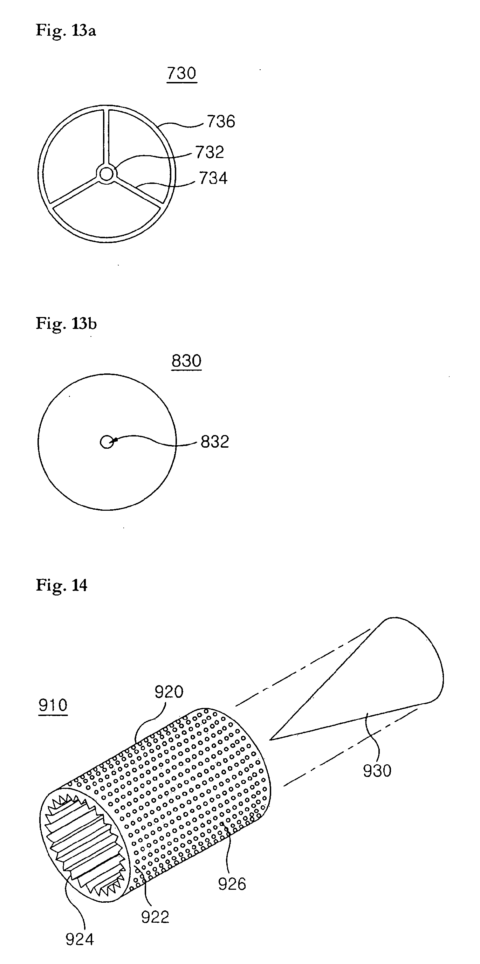

Fig 13a is a front view illustrating the supporting body in Fig. 11; and Fig 13b is a front view illustrating the supporting body according to another embodiment of the present invention.

Referring to Fig. 13a, the supporting body 730 comprises connecting part 732, supporting part 734, and base part 736.

The supporting body 730 is connected to an edge part of the cone-shaped extractor 720, and supports the cone-shaped extractor 720.

The connecting part 732 is connected to an edge part of the cone-shaped extractor 720; and the supporting part 734 and the base part 736 distribute the weight of the cone-shaped extractor 720 connected to the connecting part 732.

According to another embodiment, the supporting body 730 is combined with one end of the light pipe 700 close to the edge part of the cone-shaped extractor 720 of the light pipe 700. According to another embodiment, the length of the cone-shaped extractor 720 is shorter than that of the base pipe 710, and the supporting body 730 is connected to the edge part of the cone-shaped extractor 720 inside the base pipe 710.

The supporting body 730 may be made up of transparent materials not to interrupt the transmission course of the light, and thin metals.

Referring to Fig. 13b, the supporting body 830 is formed as a circular plate having an opening 832. The edge part of the cone-shaped extractor 720 is connected to the opening 832, and the extractor 720 is disposed at inside the base pipe 710.

According to one embodiment, the supporting body 730 may be made of a polymer which includes at least one of polycarbonate (PC), polymethyl methacrylate (PMMA), acryl, polypropylene, polystyrene and polyvinyl chloride.

The supporting body 830 may be combined to one end of the base pipe 710 or inside thereof. In case the supporting body 830 is combined to inside the base pipe 710, an edge of the circular plate may be modified to correspond to a structured inner surface 714 of the base pipe 710.

The shape of the supporting body 730 and 830 is not limited to the above, and any constitution is possible as long as it can support the extractor 720, insert the extractor 720 to inside the base pipe 710, and minimize interruption of transmission of the light.

Fig. 14 is a perspective view illustrating the light pipe according to further another embodiment of the present invention.

Referring to Fig. 14, a light pipe 910 comprises a base pipe 920 and a cone-shaped extractor 930.

An inner surface 924 of the base pipe 920 is elongated in substantially same direction as the longitudinal direction to the light pipe 910, and is structured with a plurality of linear structures arranged side by side.

An outer surface 922 of the base pipe 920 is an opposite surface to the inner surface 924, and is a substantially smooth plane.

A plurality of diffusive particles 926 are disposed on the outer surface 922. The diffusive particles 926 may be disposed more densely from one end toward the other end of the light pipe 910.

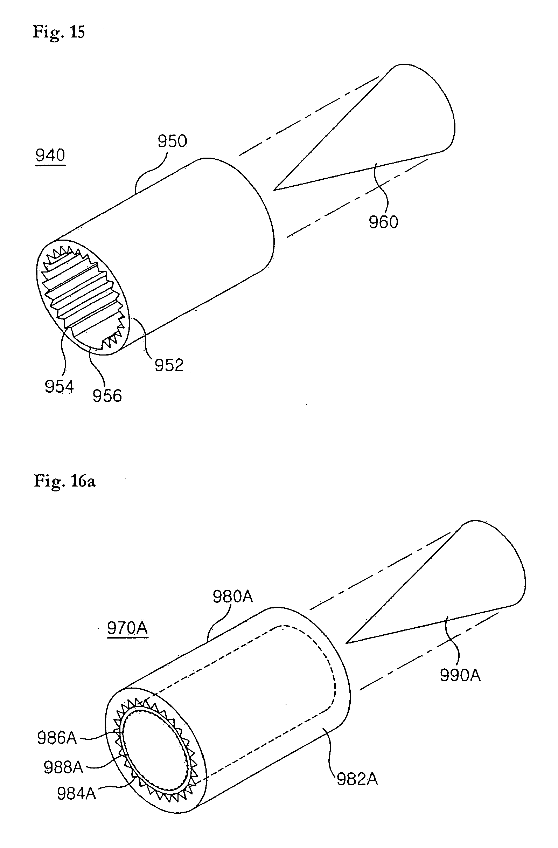

Fig. 15 is a perspective view illustrating the light pipe according to further another embodiment of the present invention.

Referring to Fig. 15, a light pipe 940 comprises a base pipe 950 and a cone-shaped extractor 960.

An inner surface 954 of the base pipe 950 is elongated in substantially same direction as the longitudinal direction to the light pipe 940, and is structured with a plurality of linear structures arranged side by side. And, at least one discharge part 956 is disposed on the inner surface 954 of the light pipe 940 for discharging a light transmitted in the light pipe 940.

An outer surface 952 of the base pipe 950 is an opposite surface to the inner surface 954, and is a substantially smooth plane.

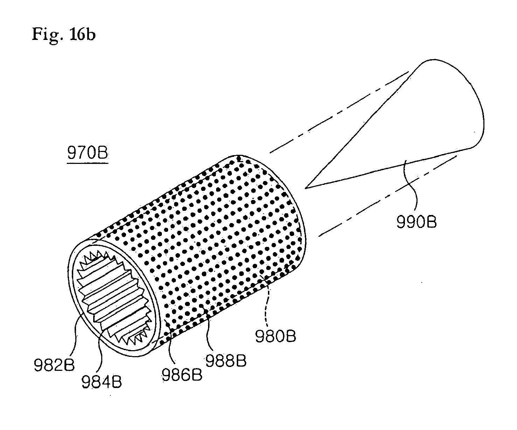

Fig. 16a and 16b are perspective views illustrating the light pipes according to other embodiments of the present invention.

Referring to Fig. 16a and 16b, a light pipe 970A and 970B comprises a base pipe 980A and 980B, a cone-shaped extractor 990A and 990B and a film 986A and 986B having a plurality of scattering patterns 988A and 988B.

An inner surface 984A and 984B of the base pipe 980A and 980B is elongated in substantially same direction as the longitudinal direction to the light pipe 970A and 970B, and is structured with a plurality of linear structures arranged side by side.

An outer surface 982A and 982B of the base pipe 980A and 980B is an opposite surface to the inner surface 984A and 984B, and is a substantially smooth plane.

The scattering patterns 988A and 988B may be formed on one surface or both surfaces of the film 986A and 986B.

In Fig. 16a, the film 986A having scattering patterns 988A is disposed at inside the base pipe 980A, and, in Fig. 16b, the film 986B having scattering patterns 988B is disposed at outside the base pipe 980B.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A hollow light pipe comprising:
a base pipe comprising a structured inner surface and a substantially smooth outer surface ; and
a plurality of diffusive particles disposed on the outer surface.

2. The hollow light pipe of claim 1, wherein the structured inner surface includes a plurality of linear structures.

3. The hollow light pipe of claim 2, wherein the linear structures are a linear array of prisms elongated substantially same direction as the longitudinal direction to the hollow light pipe.

4. The hollow light pipe of claim 1, futher comprising at least one discharge part disposed on the inner surface of the light pipe for discharging a light transmitted in the hollow light pipe.

5. The hollow light pipe of claim 1, wherein the diffusive particles are disposed more densely from one end toward the other end of the light pipe.

6. A hollow light pipe comprising:
a base pipe comprising a structured inner surface and a substantially smooth outer surface ; and
a film having a plurality of scattering patterns on at least one surface of the film, and being disposed at inside or outside the base pipe.

7. The hollow light pipe of claim 6, wherein the structured inner surface includes a plurality of linear structures.

8. The hollow light pipe of claim 7, wherein the linear structures are a linear array of prisms elongated substantially same direction as the longitudinal direction to the light pipe.

9. The hollow light pipe of claim 6, futher comprising at least one discharge part disposed on the inner surface of the light pipe for discharging a light transmitted in the light pipe.

10. The hollow light pipe of claim 6, wherein the sizes of the scattering patterns become larger from one end toward the other end of the light pipe.

11. The hollow light pipe of claim 6, wherein the scattering patterns are formed more densely from one end toward the other end of the light pipe.

12. The hollow light pipe of claim 6, further comprising a fixing plate fixing the film stably to the light pipe ,
wherein the fixing plate is a reflective mirror which fixes the film to the light pipe and reflects the light reaching the other end of the light pipe.

13. The hollow light pipe of claim 6, wherein the base pipe is made of a polymer which includes at least one of polycarbonate (PC), polymethyl methacrylate (PMMA), acryl, polypropylene, polystyrene, and polyvinyl chloride.

14. The hollow light pipe of claim 6, wherein a surface on which scattering patterns are formed is disposed toward the inside direction of the light pipe when the scattering patterns are formed on the surface of the film.

15. The hollow light pipe of claim 6, wherein an opposite surface to a surface on which scattering patterns are formed is disposed toward the inside direction of the light pipe when the scattering patterns are formed on the surface of the film.

16. A hollow light pipe comprising:
a base pipe comprising a structured inner surface and a substantially smooth outer surface ; and
a cone-shaped extractor being disposed inside the base pipe.

17. The hollow light pipe of claim 16, further comprising a supporting body being connected to an edge part of the cone-shaped extractor, and supporting the cone-shaped extractor.

18. The hollow light pipe of claim 16, wherein the structured inner surface includes a linear array of prisms elongated substantially same direction as the longitudinal direction to the hollow light pipe.

19. The hollow light pipe of claim 16, futher comprising a plurality of diffusive particles disposed on the outer surface.

20. The hollow light pipe of claim 16, futher comprising at least one discharge part disposed on the inner surface of the light pipe for discharging a light transmitted in the light pipe.

21. The hollow light pipe of claim 16, further comprising a film having a plurality of scattering patterns on at least one surface of the film, and being disposed at inside or outside the base pipe.
